# EUROPÄISCHE PATENTSCHRIFT

(11) **EP 1 585 156 B1**
(45) Veröffentlichungstag und Bekanntmachung des Hinweises auf die Patenterteilung: **01.02.2012**
(21) Anmeldenummer: 05007766.8
(22) Anmeldetag: 08.04.2005
(51) Int. Cl.: H01H 31/12

(54) **Elektrische Schaltvorrichtung**
Electric switching device
Dispositif de commutation électrique

(30) Priorität: 09.04.2004 PL 36704904
(43) Veröffentlichungstag der Anmeldung: 12.10.2005
(60) Teilanmeldung: 08003637.9
(73) Patentinhaber: APATOR S.A., 87100 Torun (PL)
(72) Erfinder: Szarzynski, Krzysztof, 88-320 Strzelno (PL); Luczak, Robert, 87-800 Wloclawek (PL); Nowakowski, Henryk, 87-100 Torun (PL); Wiatrowski, Wladyslaw, 87-100 Torun (PL)
(74) Vertreter: Hoffmeister, Helmut

(56) Entgegenhaltungen:
- EP-A- 0 013 963
- EP-A- 0 199 182
- EP-A- 0 563 530
- EP-A- 1 246 213
- DE-A1- 1 640 587
- DE-B- 1 192 727
- DE-U1- 8 211 130
- DE-U1- 9 204 399
- DE-U1- 9 204 401
- DE-U1- 29 512 870
- DE-U1- 29 605 800
- FR-A- 2 751 465

## Beschreibung

Die Erfindung betrifft eine elektrische Schaltvorrichtung mit einer Sockeleinheit und einer Deckeleinheit, die gegen das Herausnehmen aus der Sockeleinheit mit einer auslösbaren Sperre gesichert ist, wobei die Sockeleinheit mit einer Sicherungssockelleiste und die Deckeleinheit mit einem Deckel versehen ist, an dem ein Handgriff befestigt ist, mit dem ein Sperrelement als Teil der auslösbaren Sperre verbunden ist, wobei das Sperrelement Arme aufweist, die mit ersten Anschlagelementen enden, und der Deckel mit weiteren, die Bewegung des Handgriffs begrenzenden Anschlagelementen versehen ist.

Eine derartige Schaltvorrichtung mit Sockeleinheit und Deckeleinheit ist bekannt aus DE 296 05 800 U1. Der Deckel ist hierbei über einen Mechanismus relativ zur Sockeleinheit beweglich gelagert. Der Deckel besitzt ein bewegliches Verriegelungsteil. Eine ähnliche Konstruktion ergibt sich aus EP 199 182 A2.

Aus der EP 0 563 530 A1 ist eine Lastschaltleiste mit einem Gehäuse und Schalterdeckel mit einem plattenförmigen Sicherungselement bekannt. Das Sicherungselement hat Vorsprünge, die in spezielle Aussparungen des Gehäuses einrasten.

In DE 296 05 800 U1 ist eine Lastschaltleiste mit einer an ihrem Deckel gelagerten Klappe dargestellt, an der Ansatzstücke angeordnet sind, die die Länge der am Deckel angeordneten Langlöcher begrenzen. Die Lastschaltleiste besitzt ein Gehäuse, das in Ruhestellung gebracht werden kann. An einem Ende des Gehäuses sind Halterungen drehbar gelagert, an denen wiederum Deckeleinsätze zum Festlegen von Sicherungseinsätzen angebracht sind. Die Halterungen sind an einem zweiten Ende des Gehäuses mit einem Gestänge drehbar aufgenommen. In einer sogenannten Deponielage, d. h. in Ruhestellung befinden sich die an den Deckeleinsätzen angeordneten und an den Halterungen befestigten Sicherungseinsätze außerhalb des Gehäuses.

Bekannt sind auch Konstruktionslösungen für Trennschalter, deren Deckel ein verschiebbares Element aufweist, welches nach dem Ausschalten die Bewegung eines Schalthebels begrenzt und dadurch das Herausnehmen des Deckels verhindert.

Aufgabe der Erfindung ist, eine elektrische Schaltvorrichtung mit Sockel- und Deckeleinheit mit verbesserter Funktion zu konzipieren, die in ihrer Herstellung kostengünstiger sein kann als bekannte Konstruktionen.

Diese Aufgabe wird gelöst bei einer elektrischen Schaltvorrichtung nach Anspruch 1, mit einer Deckeleinheit, die gegen das Herausnehmen aus der Sockeleinheit mit einer auslösbaren Sperre gesichert ist, bei der der Handgriff einstückig mit wenigstens einem Sperrelement ausgeführt ist und das Sperrelement federnde Arme aufweist, die mit den Anschlagselementen enden.

Gemäß der Erfindung kann die elektrische Schaltvorrichtung auch eine Parkfunktion des Schalters besitzen, wobei der Handgriff ein zweites Sperrelement besitzt. In dem Handgriff kann sich wenigstens ein zweites Sperrelement befinden, das sich mit wenigstens einem ersten, am Gehäuse angeordneten Sperrvorsprung verzahnt.

Die Konstruktionslösung des Handgriffes des elektrischen Schalters gemäß der Erfindung kann weiterhin vorsehen, dass an einem unteren Teil des Griffteils zwei Seitenteile angeordnet sind, von denen wenigstens ein Seitenteil eine Aussparung aufweist.

Die Aussparung hat etwa eine S-Form und setzt sich vorzugsweise aus drei miteinander verbundenen Teilen, nämlich aus dem ersten Teil, aus dem zweiten Teil und dem dritten Teil, zusammen.

Das erste Teil der Aussparung bildet mit dem zweiten Teil der Aussparung einen stumpfen Winkel, dagegen ist das dritte Teil der Aussparung mit einem Ende des zweiten Teils der Aussparung verbunden.

Der Handgriff gemäß der Erfindung weist wenigstens an einem seinem Seitenteil wenigstens einen Stift auf, der in eine ovale Öffnung des Deckels beweglich hineinragt. Der Stift besitzt vorzugsweise einen Kragen.

Ein Vorteil der Erfindung ist, dass das erste Sperrelement des Schalters unlösbar mit dem Handgriff verbunden, beispielsweise einstückig mit dem Handgriff ist, wodurch eine Möglichkeit der Sperrung bzw. der der Blockade des Deckels eintritt, ohne die zusätzlichen Elemente verwendet werden müssen. Dadurch entstehen keine zusätzlichen Kosten. Die Vorrichtung kann in kürzester Zeit montiert und betriebsbereit gemacht werden.

Ein anderer Vorteil der Erfindung ist, dass das zweite Sperrelement unlösbar mit dem Handgriff verbunden, beispielsweise einstückig mit dem Handgriff ausgeführt ist. Das Sperrelement ermöglicht die Ruhestellung, d.h. eine Ruhelage des Trennschalters. Zugleich besteht die Möglichkeit einer einfachen Sperre mit Hilfe eines Hängeschlosses, ohne die Kosten des Apparates vergrößern zu müssen.

Ein weiterer Vorteil der Erfindung ist, dass die sich in dem Seitenteil des Hebels befindenden Aussparungen in S-Form den Kraftaufwand während des Trennungsprozesses des Schalters verkleinern, wenn die Sicherungseinsätze sich aus den Andruckflächen herausschieben und in Endphase des Einschaltens des Schalters in die Andruckfläche einschieben.

Der Gegenstand der Erfindung wird in Ausführungsbeispielen anhand der Zeichnung veranschaulicht. Die Figuren der Zeichnung zeigen:
- Fig.: 1 einen Lastschalter in perspektivischer Darstel- lung;
- Fig. 2: einen Sicherungssockel in perspektivischer Dar- stellung;
- Fig. 3: zeigt den Sicherungssockel in Explosionsdar- stellung und in perspektivischer Darstellung;
- Fig. 4: zeigt den Sicherungssockel;
- Fig. 5: zeigt den Befestigungssitz eines Sicherungsso- ckels in perspektivischer Darstellung;
- Fig. 6: zeigt eine perspektivische Darstellung des Lastschalters im geöffneten Zustand;
- Fig. 7: zeigt das Innere des Schalters in Seitenan- sicht;
- Fig. 8: zeigt ein Detail A des in Fig. 7 abgebildeten Schalters;
- Fig. 9: zeigt den elektrischen Schalter in Ruhestel- lung;
- Fig. 10: zeigt das Detail B des in der Fig. 9 abgebilde- ten Schalters;
- Fig. 11: zeigt einen Querschnitt C-C des in Fig. 9 abge- bildeten Schalters;
- Fig. 12: zeigt ein Detail D des zweiten, in der Fig. 11 abgebildeten Sperrelementes.

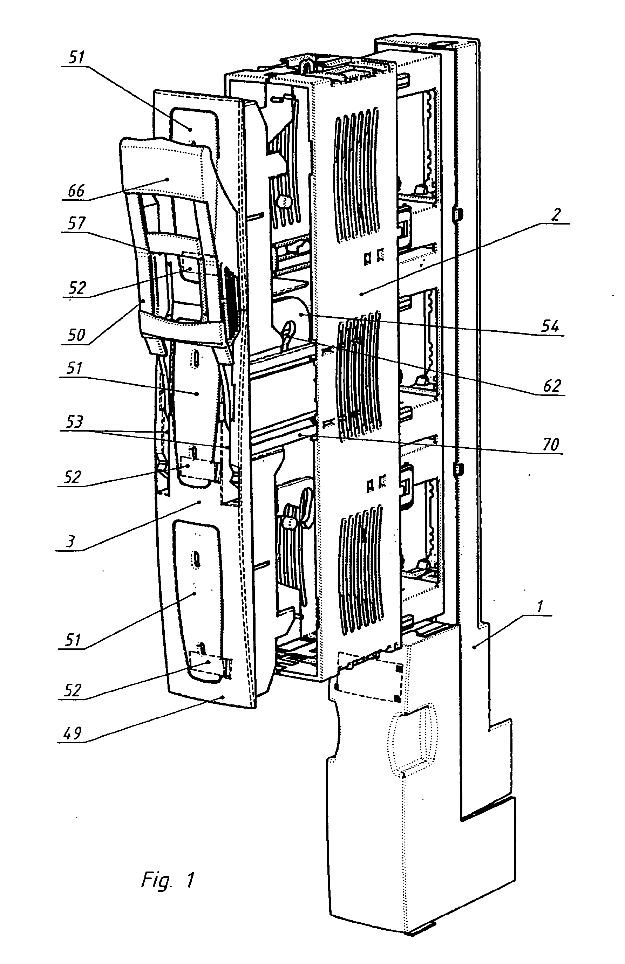

In einer beispielhaften Ausführungsform gemäß Fig. 1 umfasst der elektrische Schalter gemäß der Erfindung eine Sockeleinheit 1, ein mit dieser verbundenes Gehäuse 2 und eine Deckeleinheit 3.

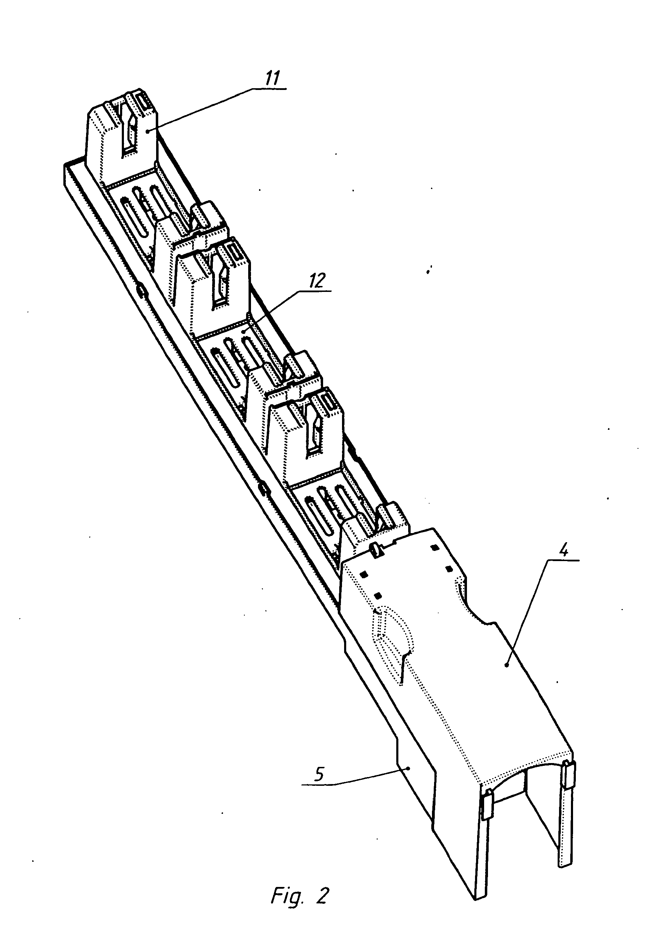

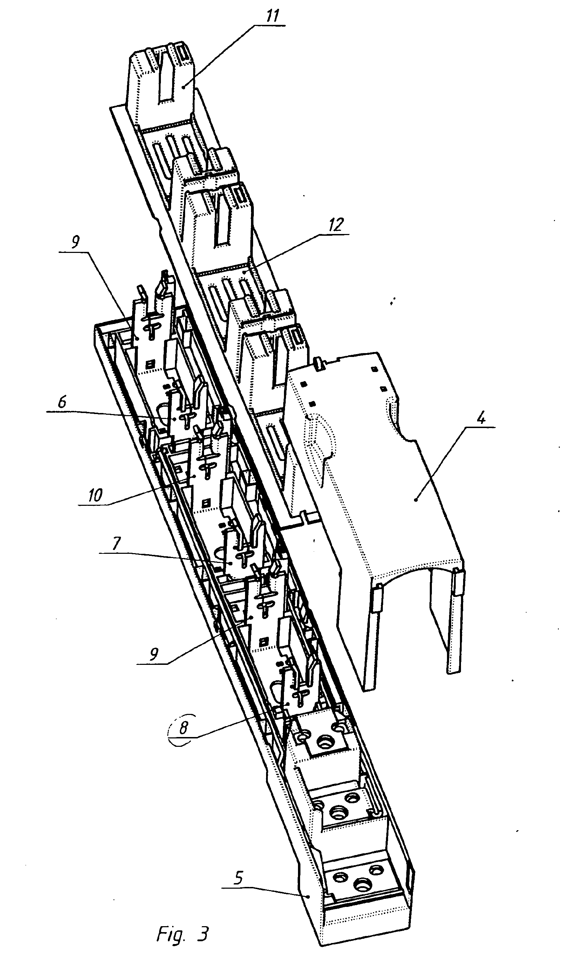

Die Sockeleinheit 1 gemäß den Figuren 2 und 3 umfasst eine Sicherungssockelleiste 5, eine erste, zweite und dritte Ableitschiene 6, 7 und 8 und eine erste und zweite Anschlussschiene 9, 10. Weiterhin sind Kontaktabdeckungen 11, Abdeckplättchen 12 und eine Klemmhaube 4 vorhanden.

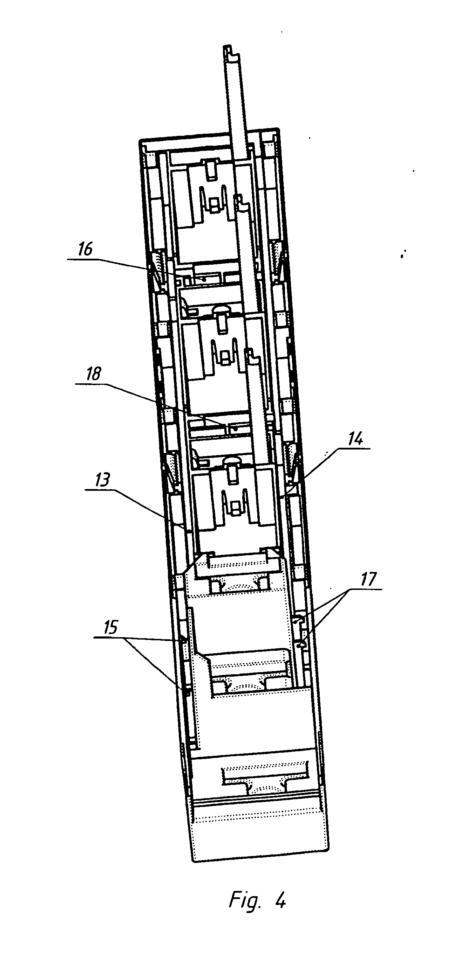

Die Sicherungssockelleiste 5 besitzt ferner (vgl. Fig. 4) eine erste Führungsnut 13 zur Halterung der ersten Ableitschiene 6 und eine zweite Führungsnut 14 zur Halterung der zweiten Ableitschiene 7. Die Sicherungssockelleiste 5 besitzt außerdem Halteclipse zur Befestigung der Ableitschienen., und zwar einen ersten Halteclip 15 und einen zweiten Halteclip 16 zur Befestigung der ersten Ableitschiene 6, sowie einen dritten Halteclip 17 und einen vierten Halteclip 18 zur Befestigung der zweiten Ableitschiene 7.

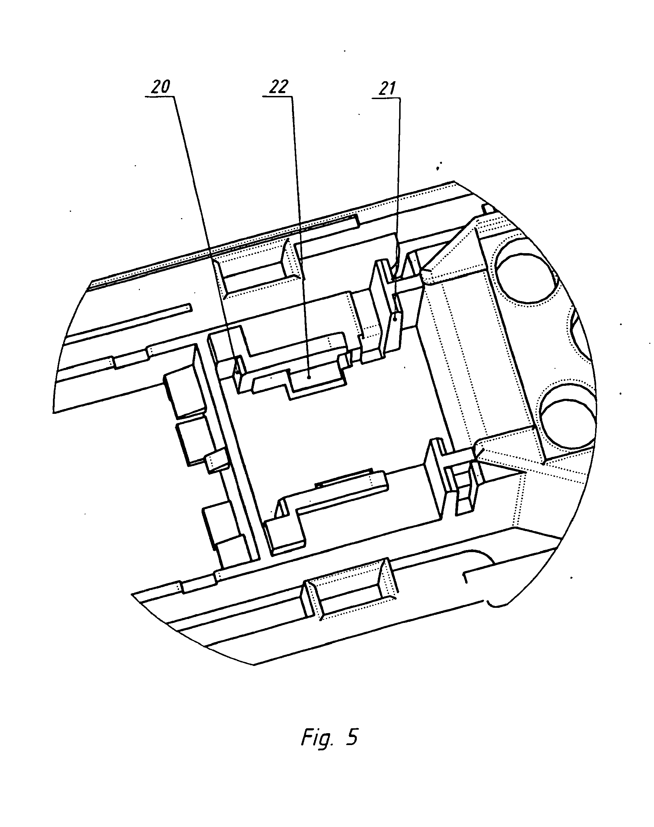

Bei dem in Fig. 5 dargestellten Befestigungssitz der Sicherungssockelleiste sind dritte Führungselemente 20 und vierte Führungselemente 21 dargestellt, in die die dritte Ableitschiene 8 einzuschieben ist. Nach dem vollständigen Einschieben der dritten Ableitschiene 8 in die Führungselemente 20 und 21 lässt sich die dritte Ableitschiene 8 durch Haltclipse 22 festlegen.

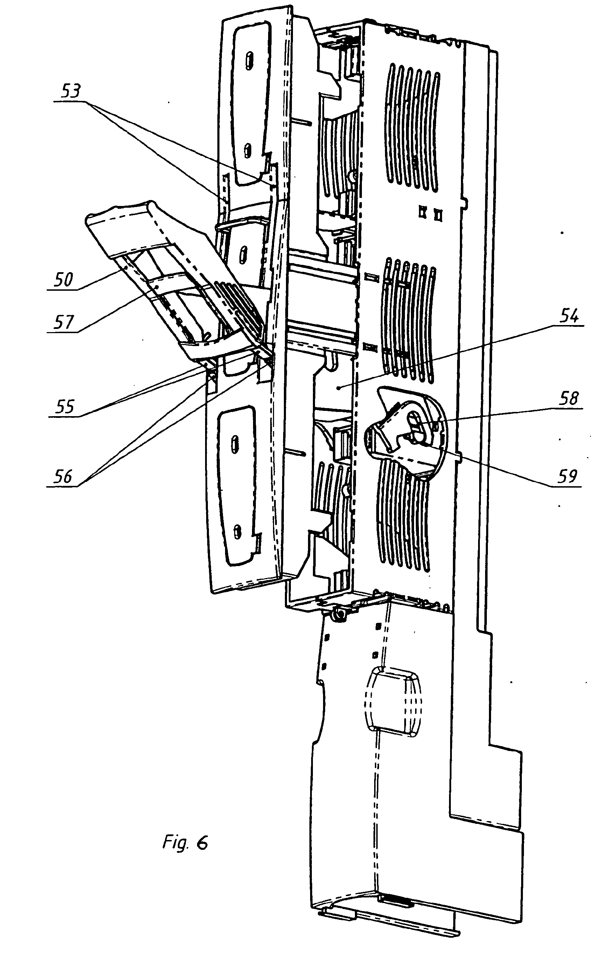

Die Deckeleinheit 3 umfasst einen Deckel 49, einen Handgriff 50, drei durchsichtige Abdeckungen 51 und Beschriftungselemente 52 (vgl. Figuren 1, 4 und 6). An dem Deckel 49 sind zwei mit dem Handgriff 50 zusammenwirkende Schlitze 53 zur Aufnahme von Seitenteilen 54 des Handgriffes 50 angeordnet. Beim Einschalten werden die Seitenteile 54 längs der Schlitze 53 verschoben.

Auf der Außenseite des Deckels 49 sind entsprechend geformte zweite Anschlagelemente 56 angeordnet, welche zusammen mit den am Handgriff 50 angeordneten ersten Anschlagelementen 55 eines ersten Sperrelementes 57 eine Blockade bilden. Die ersten Anschlagelemente 55 des ersten Sperrelementes 57 stützen sich bei vollem Öffnen des Schaltergriffes an den zweiten Anschlagelementen 56 im Deckel 49 ab. Dies verhindert eine weitere Bewegung des Handgriffes 50. Bei dieser Lage des Handgriffes 50 haken die in den Seitenteilen 54 des Handgriffes 50 entsprechend geformten, ersten Aussparungen 58 an zweite Stifte 59 im Gehäuse 2 und verhindern dadurch das Herausnehmen der Deckeleinheit 3 aus dem Gehäuse 2.

Nach dem Anheben des Schaltergriffes und Drücken des ersten Sperrelementes 57 biegen sich gleichzeitig die sich im Handgriff 50 befindenden, federnden Schenkel, wodurch die ersten Anschlagelemente 55 des ersten Sperrelementes 57 im Handgriff 50 sich hinter die zweiten Anschlagelementen 56 im Deckel 49 positionieren und die ersten Aussparungen 58 in den Seitenteilen 54 des Handgriffes 50 sich aus den zweiten Stiften 59 lösen. Dies ermöglicht ein ungehindertes Herausnehmen der Deckeleinheit 3 aus dem Gehäuse 2.

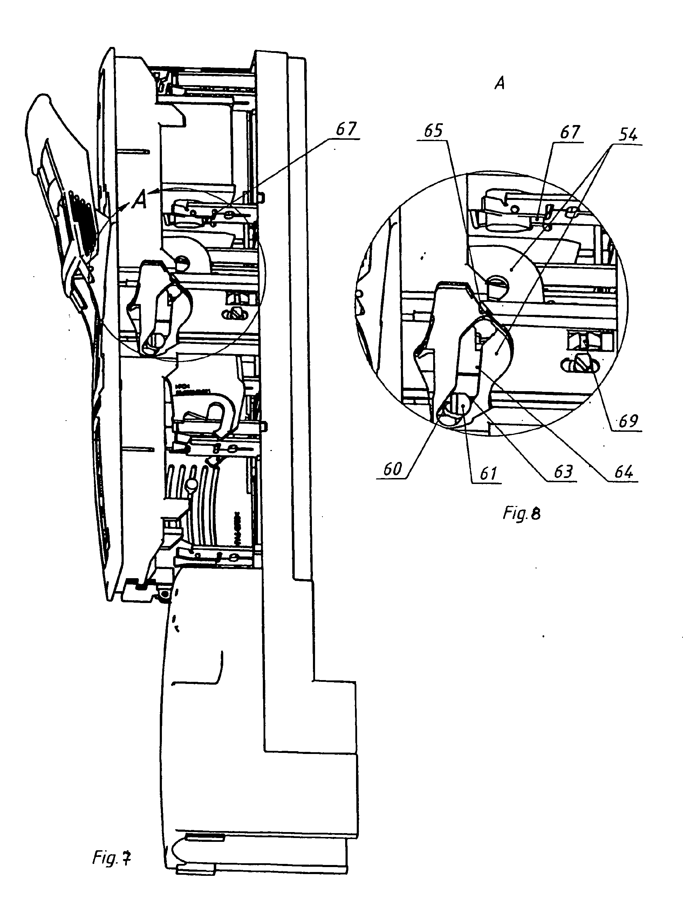

Auf den Innenseiten der Seitenelemente des Deckels 49 sind erste Stifte 60 mit den ersten Kragen 61 angeordnet, die mit den sich in den Seitenteilen 54 des Handgriffes 50 befindenden S-förmigen Aussparungen 62 zusammenwirken (vgl. Figuren 7 und 8).

Die S-förmigen Aussparungen 62 setzen sich aus drei Teilen zusammen. Das erste Teil 63 schließt sich unter Bildung eines stumpfen Winkels an das zweite Teil 64 an; das dritte Teil 65 schließt sich an ein Ende des zweiten Teils 64 an. Das erste und das zweite Teil 63, 64 sind entlang einer Geraden und das dritte Teil entlang eines Bogens geführt. Die Ausgestaltung der Aussparung verleiht die erforderliche Kraft, die auf ein Griffteil 66 während Trennungsprozesses des Schalters einwirken muss.

An den Seitenteilen 54 des Handgriffes 50 befinden sich weitere Stifte mit Kragen, die mit den ovalen, an Seitenelementen des Deckels 49 angeordneten Öffnungen kontaktieren. Während der Betätigung des Handgriffes bewirkt der Handgriff 50 eine Drehbewegung gegenüber einer Längsachse der Stifte 78 und zugleich eine Vor- und Rücklaufbewegung entlang der ovalen Öffnung 77.

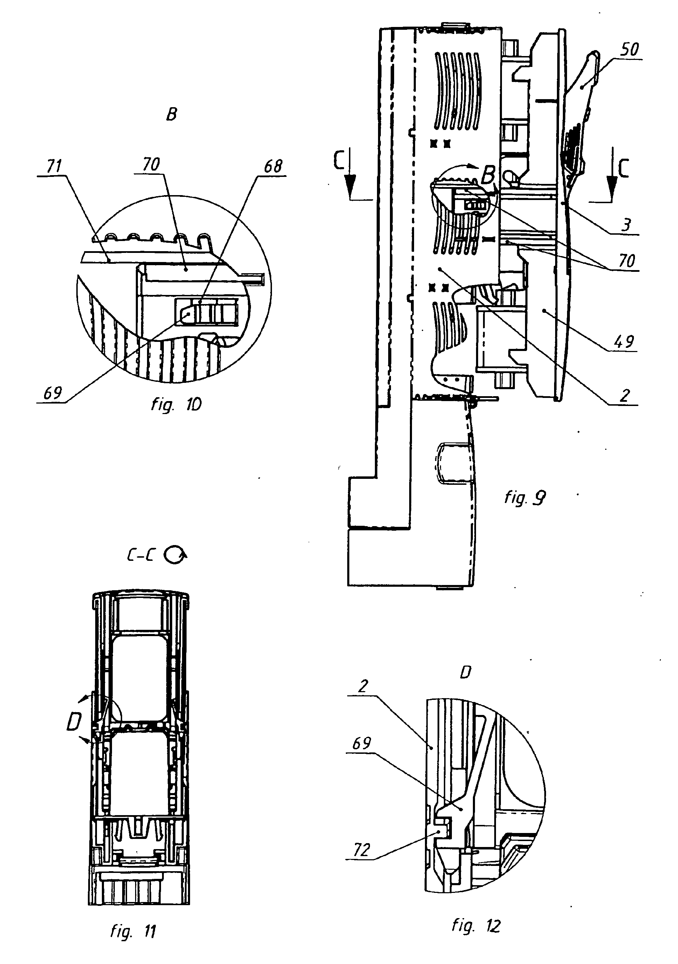

An den Seitenteilen des Deckels 49 befinden sich rechteckige, mit einem zweiten Sperrelement 69 des Handgriffs 50 kontaktierende, rechteckige Öffnungen 68 (vergl. Fig. 12). Hierbei ist der Handgriff 50 einstückig mit dem zweiten Sperrelement 69 verbunden.

In Schließstellung des Trennschalters und nach dem Herausnehmen der Deckeleinheit 3 aus dem Gehäuse 2, wenn der Handgriff 50 sich in Schließstellung des Trennschalters befindet, rastet das zweite Sperrelement 69 in der rechteckigen Öffnung 68 in den Seitenteilen des Deckels. Die herausgenommene Deckeleinheit 3 mit dem Handgriff 50, der sich in der Schließstellung des Trennschalters befindet, kann ins Gehäuse 2 eingeschoben werden, indem das erste Führungselement 70 in die zweiten Führungselemente 71 ein geschoben wird. Dadurch rastet das zweite Sperrelement 69 an dem ersten Sperrvorsprung 72 am Gehäuse 2. So wird die Deckeleinheit 3 am Gehäuse 2 arretiert (vgl. Fig. 15). Der Zustand bedeutet die Ruhestellung oder Haltestellung des Trennschalters. Beim Ausüben einer entsprechenden Bewegung des Handgriffes 50, wie während der Trennung durch den Trennschalter, erfolgt das Aushaken und Lösen des zweiten Sperrelementes 69 aus dem ersten Sperrvorsprung 72 am Gehäuse 2. Dies ermöglicht das Herausnehmen der Deckeleinheit 3 aus dem Gehäuse 2 des Trennschalters.

## Patentansprüche

1. Elektrische Schaltvorrichtung mit einer Sockeleinheit (1) und einer Deckeleinheit (3), die gegen das Herausnehmen aus der Sockeleinheit mit einer auslösbaren Sperre gesichert ist, wobei die Sockeleinheit mit einer Sicherungssockelleiste (5) und die Deckeleinheit (3) mit einem Deckel (49) versehen ist, an dem ein Handgriff (50) befestigt ist, mit dem ein Sperrelement (57) als Teil der auslösbaren Sperre verbunden ist, wobei das Sperrelement Arme aufweist, die mit ersten Anschlagelementen (55) enden, und der Deckel (49) mit weiteren, die Bewegung des Handgriffs (50) begrenzenden Anschlagelementen (56) versehen ist, **dadurch gekennzeichnet, dass** der Handgriff (50) einstückig mit wenigstens einem Sperrelement (57; 69) ausgeführt ist und dass das Sperrelement (57) federnde Arme aufweist, die mit den Anschlagselementen enden.

2. Schaltvorrichtung nach Anspruch 1, **dadurch gekennzeichnet, dass** das Sperrelement (69) mit wenigstens einem ersten, am Gehäuse (2) angeordneten Sperrvorsprung (72) verzahnt ist.

3. Schaltvorrichtung nach Anspruch 1, **dadurch gekennzeichnet, dass** an einem Griffteil (66) des Handgriffs (50) zwei Seitenteile (54) angeordnet sind, von den wenigstens eines eine Aussparung (62) aufweist.

4. Schaltvorrichtung nach Anspruch 3, **dadurch gekennzeichnet, dass** die Aussparung (62) wenigstens zwei miteinander verbundene Teilstücke beinhaltet, nämlich ein erstes Teil (63) und/oder ein zweites Teil (64) und/oder ein drittes Teil (65).

5. Schaltvorrichtung nach Anspruch 4, **dadurch gekennzeichnet, dass** die Aussparung (62) eine S-Form hat.

6. Schaltvorrichtung nach Anspruch 4 und 5, **dadurch gekennzeichnet, dass** der erste Teil (63) der Aussparung (62) mit dem zweiten Teil (64) der Aussparung (62) einen stumpfen Winkel bildet, und dass der dritte Teil (65) der Aussparung (62) mit einem Ende des zweiten Teils (64) der Aussparung (62) verbunden ist.

7. Schaltvorrichtung nach einem der vorhergehenden Ansprüche, **dadurch gekennzeichnet, dass** wenigstens an einem Seitenteil (54) des Handgriffes (50) wenigstens ein Stift angeordnet ist, der in eine Öffnung des Deckels ragt, wobei der Stift einen Kragen besitzt.

## Claims

1. Electrical switching device having a base unit (1) and a cover unit (3) which is protected from being removed from the base unit by means of an activatable lock, wherein the base unit is provided with a safety base strip (5) and the cover unit (3) is provided with a cover (49), to which there is attached a handle (50), to which a locking element (57) is connected as part of the activatable lock, wherein the locking element comprises arms which terminate with first stop elements (55), and the cover (49) is provided with further stop elements (56) which limit the movement of the handle (50), **characterised in that** the handle (50) is formed in one piece with at least one locking element (57; 69) and that the locking element (57) comprises resilient arms which terminate with the stop elements.

2. Switching device as claimed in claim 1, **characterised in that** the locking element (69) is interlocked with at least one first locking projection (72) disposed on the housing (2).

3. Switching device as claimed in claim 1, **characterised in that** two lateral parts (54) are disposed on a gripping part (66) of the handle (50), wherein at least one of the lateral parts comprises a recess (62).

4. Switching device as claimed in claim 3, **characterised in that** the recess (62) includes at least two mutually connected part pieces, namely a first part (63) and/or a second part (64) and/or a third part (65).

5. Switching device as claimed in claim 4, **characterised in that** the recess (62) has an S-shape.

6. Switching device as claimed in claim 4 and 5, **characterised in that** the first part (63) of the recess (62) together with the second part (64) of the recess (62) form an obtuse angle, and **in that** the third part (65) of the recess (62) is connected to one end of the second part (64) of the recess (62).

7. Switching device as claimed in any one of the preceding claims, **characterised in that** disposed at least on one lateral part (54) of the handle (50) is at least one pin which protrudes into an opening in the cover, wherein the pin has a collar.

## Revendications

1. Dispositif de commutation électrique incluant une unité de socle (1) et une unité de couvercle (3) qui est bloquée par un verrou libérable pour empêcher son retrait hors de l'unité de socle (3), dans lequel l'unité de socle comporte une nervure (5) de socle pour son blocage et l'unité de couvercle (3) comporte un couvercle (49) auquel est attachée une manette (50) à laquelle est joint un élément (57) de verrou qui fait partie du verrou libérable, l'élément de verrou comportant des bras qui se terminent par des premiers éléments de butée (55), et le couvercle (49) comportant des éléments additionnels de butée (56) limitant le déplacement de la manette (50), **caractérisé en ce que** la manette (50) est fabriquée d'un seul tenant avec au moins un élément (57; 69) de verrou et **en ce que** l'élément (57) de verrou comporte des bras élastiques qui se terminent par les éléments de butée.

2. Dispositif de commutation selon la revendication 1, **caractérisé en ce que** l'élément (69) de verrou est endenté avec au moins une première saillie (72) de verrou disposée sur le boîtier (2).

3. Dispositif de commutation selon la revendication 1, **caractérisé en ce que** deux parties latérales (54), dont l'une au moins comporte un évidement (62), sont disposées sur une partie de saisie (66) de la manette (50).

4. Dispositif de commutation selon la revendication 3, **caractérisé en ce que** l'évidement (62) contient au moins deux parties jointes l'une à l'autre, à savoir une première partie (63) et/ou une deuxième partie (64) et/ou une troisième partie (65).

5. Dispositif de commutation selon la revendication 4, **caractérisé en ce que** l'évidement (62) est en forme de S.

6. Dispositif de commutation selon la revendication 4 ou 5, **caractérisé en ce que** la première partie (63) de l'évidement (62) forme un angle obtus avec la deuxième partie (64) de l'évidement (62), et **en ce que** la troisième partie (65) de l'évidement (62) est jointe à une extrémité de la deuxième partie (64) de l'évidement (62).

7. Dispositif de commutation selon l'une quelconque des revendications précédentes, **caractérisé en ce qu'**au moins une cheville qui fait saillie dans une ouverture du couvercle est disposée sur une partie latérale (54) de la manette (50), la cheville possédant une collerette.
